# EUROPÄISCHE PATENTSCHRIFT

(11) **EP 3 951 113 B1**
(45) Veröffentlichungstag und Bekanntmachung des Hinweises auf die Patenterteilung: **25.02.2026**
(21) Anmeldenummer: 20189195.9
(22) Anmeldetag: 03.08.2020
(51) Int. Cl.: E04F 11/18, F16B 37/04

(54) **GELÄNDERSYSTEM**
RAILINGSYSTEM
SYSTÈME DE GARDE-CORPS

(43) Veröffentlichungstag der Anmeldung: 09.02.2022
(73) Patentinhaber: Croso International GmbH, 59757 Arnsberg (DE)
(72) Erfinder: Cronenberg, Carl-Julius, 59757 Arnsberg (DE); Terrey, Olaf, 59757 Arnsberg (DE); Jung, Alexander, 10961 Berlin (DE); Karges, Ramon, 10559 Berlin (DE); Mühr, Oliver, 10557 Berlin (DE)
(74) Vertreter: Fritz Patent- und Rechtsanwälte PartmbB

(56) Entgegenhaltungen:
- EP-A1- 0 253 801
- CN-A- 105 090 179
- DE-A1- 102012 002 595
- FR-A1- 2 237 034
- US-A- 3 061 055
- US-A- 4 809 955
- US-A- 5 833 417
- US-A1- 2015 176 631
- US-A1- 2015 233 410
- US-B1- 8 820 721

## Beschreibung

Die vorliegende Erfindung betrifft ein System umfassend ein Bauteil, ein am Bauteil befestigtes Geländer mit mehreren Geländermodulen und ein Befestigungsprofil.

Aus dem Stand der Technik sind Balkongeländer bekannt, die mit Muttern und Schrauben an einem Balkon befestigt werden. Die US 8 820 721 B1 offenbart ein Balkongeländer mit Glaselementen, das unter Verwendung von in einer T-Nut eines Profils angeordneten Muttern mit Schrauben am Balkon befestigt wird.

Die DE 10 2012 002 595 A1 offenbart eine Beplankungsanordnung mit mehreren einzelnen Modulen, die mehrere an Profilleisten befestigte Beplankungselemente aufweisen. Alle Beplankungselemente haben jeweils gleiche Abmessungen und gleiche Abstände zu benachbarten Beplankungselementen. Aneinandergrenzende Module sind durch in die Profilleisten eingesetzte Bolzen miteinander verbindbar. Die Profilleisten weisen ein zu einer Mittelebene spiegelsymmetrisches Querschnittsprofil auf, mit einer T-förmigen Nut zur Aufnahme von Nutensteinen mit Innengewinde. Weiter haben sie zwei Längsnuten mit ebenen Seitenwänden, wobei am Boden der Längsnuten eine Öffnung vorhanden ist, an die sich eine kreisförmige Längsnut anschließt, in welche Bolzen zum Verbinden der Module einsetzbar sind.

Ganze an einem festen Gebäudeteil befestigten Geländer sind aus den Dokumenten FR2237034A1 und US4809955A bekannt.

Demgegenüber liegt der Erfindung die Aufgabe zugrunde, ein System mit einem Bauteil und einem am Bauteil befestigten Geländer mit mehreren Geländermodulen mit einer besonders einfachen Befestigungsmöglichkeit zu schaffen. Bei dem Bauteil kann es sich beispielsweise um einen Balkon, einen französischen Balkon oder eine Treppe handeln. Allgemein kann das Geländer auch als Brüstung verwendet werden.

Diese Aufgabe wird durch ein System nach Anspruch 1 gelöst. Ausführungsformen der Erfindung sind in den abhängigen Ansprüchen angegeben.

Das System umfasst ein Bauteil, ein am Bauteil befestigtes Geländer mit mehreren Geländermodulen nach einer Ausführungsform der Erfindung. Außerdem umfasst das System das Befestigungsprofil. Das Geländer ist mit dem Befestigungsprofil an einem Rand des Bauteils befestigt. Die Geländermodule sind aneinander befestigt.

Bei dem Bauteil kann es sich beispielsweise um ein einem Gebäude vorgesetztes Bauteil wie beispielsweise einen Balkon, französischen Balkon, eine Brüstung oder Treppe handeln. Das Bauteil kann beispielsweise aus Beton und/oder Stein gefertigt sein.

Das Geländermodul umfasst zumindest einen ersten Nutenstein, ein erstes Profil und am ersten Profil angeordnete Stabilisierungsmittel. Die Stabilisierungsmittel können beispielsweise als Streben ausgebildet sein. Alternativ können als Stabilisierungsmittel auch eine einzelne oder mehrere Platten vorgesehen sein. Es ist auch möglich, dass die Stabilisierungsmittel einen Rahmen und einen Füllstoff umfassen, wobei der Füllstoff innerhalb des Rahmens angeordnet ist. Als Füllstoff können beispielsweise Platten aus verschiedenen Materialien vorgesehen sein. Es ist auch möglich, dass der Füllstoff als Glas ausgebildet ist. Wichtig ist, dass die Stabilisierungsmittel bei Befestigung am ersten Profil und an einem weiteren Bauteil die Stabilität des Geländermoduls wesentlich verbessern oder gewähren. Das erste Profil kann sich beispielsweise in einer horizontalen Richtung erstrecken. Hierunter wird im Rahmen dieser Beschreibung insbesondere verstanden, dass sich die Längsachse des ersten Profils in einer horizontalen Richtung erstreckt. Unter der Längsachse wird dabei insbesondere die Achse verstanden, in der das Profil die größte Ausdehnung aufweist. Wenn die Stabilisierungsmittel als Streben ausgebildet sind, können sie insbesondere senkrecht zum ersten Profil angeordnet sein. Es ist beispielsweise möglich, dass sich die Längsachsen der Streben in einer vertikalen Richtung erstrecken. Die Richtungsangaben "vertikal" und "horizontal" sind dabei innerhalb dieser Beschreibung insbesondere so zu verstehen, dass es sich um die Richtungen handelt, wenn das Geländermodul in bestimmungsgemäßer Weise an einem horizontalen Bauteil, z.B. einem Balkon, einem französischen Balkon oder einer Brüstung, befestigt ist. Es ist jedoch auch möglich, dass das Geländermodul in bestimmungsgemäßer Weise an einem relativ zu einer horizontalen Ebene geneigten Bauteil befestigt wird. Dabei kann es sich beispielsweise um eine Treppe handeln. In diesem Fall verlaufen die in dieser Beschreibung als "horizontal" beschriebenen Richtungen parallel zu dem geneigten Bauteil. Die als "vertikal" beschriebenen Richtungen verlaufen dann senkrecht zu dem geneigten Bauteil.

Es ist auch möglich, dass sich die Längsachsen der Streben ausgehend vom ersten Profil in einer Richtung erstrecken, die weder senkrecht noch parallel zum ersten Profil ist. Eine solche Richtung kann beispielswiese als geneigt bezeichnet werden.

Unter Nutensteinen werden im Rahmen dieser Beschreibung insbesondere Bauteile verstanden, die formschlüssig in einer zugehörigen T-Nut eines Profils (z.B. des ersten Profils) angeordnet sind und im innerhalb dieser T-Nut angeordneten Zustand eine Relativbewegung zwischen dem Profil mit der T-Nut und den Nutensteinen ermöglichen. Bei der Relativbewegung kann es sich insbesondere um eine translatorische Schiebebewegung handeln. Die Formschlüssigkeit ermöglicht eine Verschiebung alleine in einer einzigen Richtung in der T-Nut relativ zum Profil. Es kann also beispielsweise das Profil bewegt werden, während die Nutensteine fixiert sind. Es ist jedoch auch möglich, dass die Nutensteine bewegt werden, während das Profil fixiert ist. Andere Bewegungsfreiheitsgerade sind durch die Begrenzungen der T-Nut mit Ausnahme von Herstellungstoleranzen blockiert. Außerdem können die Nutensteine zur Befestigung des jeweiligen Profils an anderen Bauteilen, z.B. einem anderen Profil, verwendet werden. Der erste Nutenstein wird zur Befestigung des ersten Profils an einem anderen Profil verwendet.

Die Stabilisierungsmittel sind an dem ersten Profil angeordnet. Die Stabilisierungsmittel können beispielsweise über ein anderes Bauteil, beispielsweise ein weiteres Profil, oder auch direkt am ersten Profil befestigt sein. Das erste Profil weist eine erste T-Nut auf. Vorzugsweise erstreckt sich die erste T-Nut über das gesamte erste Profil. Unter einer T-Nut wird dabei im Rahmen dieser Beschreibung insbesondere eine T-förmige Nut verstanden. Die T-Nut kann beispielsweise einen mittleren Bereich umfassen, der sich entlang einer geometrischen Längsachse des Profils erstreckt. Unter der Längsrichtung wird dabei im Rahmen dieser Beschreibung insbesondere die Richtung verstanden, in der das Profil seine größte Ausdehnung aufweist. An den mittleren Bereich können sich in Querrichtung zwei äußere Bereiche anschließen, die parallel zum mittleren Bereich verlaufen. Die äußeren Bereiche können insbesondere von Hinterschneidungen verdeckt sein.

Das andere Profil kann beispielsweise ein Befestigungsprofil sein, das an einem Bauteil, z.B. einem Balkon, einem französischen Balkon, einer Brüstung oder einer Treppe, befestigt ist. In diesem Fall wird das Geländermodul über das erste Profil und das Befestigungsprofil am Bauteil befestigt. Das Befestigungsprofil kann auch Bestandteil des Geländermoduls sein. Das erste Profil kann auch ein Handlauf des Geländermoduls sein. In diesem Fall kann das andere Profil, an dem der Handlauf befestigt wird, ein Verbindungsprofil sein, das direkt an einem oberen Ende der Stabilisierungsmittel angeordnet ist. So lässt sich der Handlauf besonders einfach direkt am Verbindungsprofil befestigen und demontieren.

Der erste Nutenstein ist profilförmig ausgebildet und in die erste T-Nut einschiebbar. Unter einer profilförmigen Ausbildung wird dabei im Rahmen dieser Beschreibung insbesondere verstanden, dass der erste Nutenstein eine Längsachse aufweist, die deutlich länger als seine Quer- und Hochachse ist. Die Längsachse ist länger als das 10-fache der Länge der Querachse oder der Hochachse. Es ist insbesondere möglich, dass der erste Nutenstein über seine gesamte Länge die gleiche Querschnittsform mit Ausnahme von eventuell vorhandenen Durchführungen aufweist.

Aufgrund dieser länglichen Ausgestaltung ist bei solch einem ersten Nutenstein eine Verdrehung innerhalb der ersten T-Nut nicht möglich. Die Montage ist trotzdem relativ einfach, da für eine Befestigung der erste Nutenstein lediglich in die erste T-Nut eingeschoben werden und dort - beispielsweise kraftschlüssig - fixiert werden muss. Das Einschieben kann in der zweiten Ausrichtung erfolgen. Die Fixierung kann beispielsweise mittels Befestigungselementen wie Schrauben erfolgen. Im fixierten Zustand ist das erste Profil dann nicht mehr relativ zum ersten Nutenstein verschiebbar.

Nach einer Ausführungsform der Erfindung kann das Geländermodul Befestigungselemente umfassen. Die Befestigungselemente können beispielsweise Schrauben sein. Der erste Nutenstein kann in der zweiten Ausrichtung innerhalb der ersten T-Nut verschiebbar sein. Vorzugsweise ist er innerhalb der gesamten ersten T-Nut verschiebbar. Der erste Nutenstein kann unter Verwendung zumindest eines der Befestigungselemente in der ersten T-Nut, insbesondere an einer beliebigen Position, kraftschlüssig fixierbar sein. Im fixierten Zustand ist der erste Nutenstein dann nicht mehr verschiebbar.

Der erste Nutenstein kann mehrere Durchführungen aufweisen, in die die Befestigungselemente einschraubbar sind.

Die Befestigungselemente können beispielsweise das erste Profil mit dem anderen Profil verbinden. Aufgrund der kraftschlüssigen Fixierung des ersten Nutensteins ist dann das erste Profil am anderen Profil befestigt.

Nach einer Ausführungsform der Erfindung kann die erste T-Nut auf einer von den Stabilisierungsmitteln weg gerichteten Seite des ersten Profils angeordnet sein. In diesem Fall kann das erste Profil direkt an den Stabilisierungsmitteln befestigt sein. Das erste Profil kann dann unterhalb der Stabilisierungsmittel angeordnet sein. Das erste Profil kann insbesondere mit dem ersten Nutenstein und den Befestigungselementen an einem Befestigungsprofil befestigbar sein.

Nach einer Ausführungsform der Erfindung kann das Geländermodul ein zweites Profil und zumindest einen zweiten Nutenstein umfassen. Das zweite Profil kann dabei parallel zum ersten Profil angeordnet sein. Die Stabilisierungsmittel können zwischen dem ersten Profil und dem zweiten Profil angeordnet sein. Das zweite Profil kann eine zweite T-Nut aufweisen. Der zweite Nutenstein kann in einer ersten Ausrichtung in die zweite T-Nut einsetzbar sein. Der zweite Nutenstein kann durch eine Verdrehung innerhalb der zweiten T-Nut aus der ersten Ausrichtung in eine zweite Ausrichtung formschlüssig in der zweiten T-Nut anordbar sein. In der zweiten Ausrichtung können insbesondere Bereiche des zweiten Nutensteins in die äußeren Bereiche der zweiten T-Nut hineinragen. Die Verdrehung kann insbesondere in einer horizontalen Ebene um eine vertikale Achse erfolgen. Vorzugsweise handelt es sich um eine Verdrehung um 90°. In der zweiten Ausrichtung kann der zweite Nutenstein innerhalb der zweiten T-Nut verschiebbar sein, aber aus ihr nur an den Enden der T-Nut herausgeschoben werden. Aufgrund des Formschlusses ist eine Entnahme zwischen den Enden der zweiten T-Nut ohne eine Beschädigung des zweiten Nutensteins und/oder des zweiten Profils unmöglich. Der zweite Nutenstein kann beispielsweise mit Befestigungselementen - wie beispielsweise Schrauben - kraftschlüssig innerhalb der ersten T-Nut fixiert werden, sodass er nicht mehr verschiebbar ist.

Das zweite Profil kann also ähnlich oder genauso wie das erste Profil an einem anderen Profil befestigt werden. Beispielsweise kann das erste Profil mit dem ersten Nutenstein an einem Befestigungsprofil befestigbar sein, wobei das Befestigungsprofil an einem Bauteil, z.B. an einem Balkon, französischen Balkon, einer Brüstung oder einer Treppe, befestigt ist. Das zweite Profil kann ein Handlauf sein, der mit dem zweiten Nutenstein an einem Verbindungsprofil befestigt ist. Das Verbindungsprofil kann Bestandteil des Geländermoduls sein und direkt an den Stabilisierungsmitteln befestigt sein. Somit kann sowohl das Geländermodul am Befestigungsprofil als auch der Handlauf am Verbindungsprofil in besonders einfacher Art und Weise befestigbar sein. Das erste Profil, das zweite Profil und das Verbindungsprofil können insbesondere parallel zueinander angeordnet sein.

Alternativ zur Verdrehung des zweiten Nutensteins von der ersten Ausrichtung in die zweite Ausrichtung kann der zweite Nutenstein auch profilförmig ausgebildet sein und in die erste T-Nut einschiebbar sein. Unter einer profilförmigen Ausbildung wird dabei im Rahmen dieser Beschreibung insbesondere verstanden, dass der zweite Nutenstein eine Längsachse aufweist, die deutlich länger als seine Quer- und Hochachse ist. Die Längsachse kann beispielsweise länger als das 10-fache der Länge der Querachse oder der Hochachse sein. Es ist insbesondere möglich, dass der zweite Nutenstein über seine gesamte Länge die gleiche Querschnittsform mit Ausnahme von eventuell vorhandenen Durchführungen aufweist.

Aufgrund dieser länglichen Ausgestaltung ist bei solch einem Nutenstein eine Verdrehung innerhalb der zweiten T-Nut nicht möglich. Die Montage ist trotzdem relativ einfach, da für eine Befestigung der zweite Nutenstein lediglich in die erste T-Nut eingeschoben werden und dort - beispielsweise kraftschlüssig - fixiert werden muss. Das Einschieben kann in der zweiten Ausrichtung erfolgen. In der ersten Ausrichtung ist der profilförmige zweite Nutenstein dann jedoch nicht in die erste T-Nut einschiebbar. Die Fixierung kann beispielsweise mittels Befestigungselementen wie Schrauben erfolgen. Im fixierten Zustand ist das zweite Profil dann nicht mehr relativ zum zweiten Nutenstein verschiebbar.

Bei der Variante des Geländermoduls mit dem verdrehbaren zweiten Nutenstein ist es insbesondere vorteilhaft, wenn das Geländermodul mehrere zweite Nutensteine umfasst. Diese zweiten Nutensteine können genauso ausgebildet sein und die gleichen Merkmale aufweisen wie der in dieser Beschreibung erwähnte zweite Nutenstein.

Nach einer Ausführungsform der Erfindung kann das Geländermodul das Verbindungsprofil umfassen. Das Verbindungsprofil kann zwischen dem zweiten Profil und den Stabilisierungsmitteln angeordnet sein. Die zweite T-Nut kann auf einer zum Verbindungsprofil hin gerichteten Seite des zweiten Profils angeordnet sein. Das zweite Profil kann mit dem zweiten Nutenstein in der zweiten Ausrichtung am Verbindungsprofil befestigt sein. Das Verbindungsprofil kann, insbesondere direkt, an den Stabilisierungsmitteln befestigt sein. Das zweite Profil kann beispielsweise als Handlauf ausgebildet sein. Unter einem Handlauf wird im Rahmen dieser Beschreibung insbesondere ein Profil mit einer durchgängigen ebenen Oberfläche verstanden, die nach oben gerichtet ist und somit für Benutzer optisch besonders auffällig ist. Das zweite Profil kann alternativ als Befestigungsprofil zur Befestigung des Geländermoduls an einem Bauteil wie einem Balkon, einem französischen Balkon, einer Brüstung oder einer Treppe ausgebildet sein.

Nach einer Ausführungsform der Erfindung kann das Geländermodul das Verbindungsprofil umfassen. Die erste T-Nut kann auf einer zum Verbindungsprofil hin gerichteten Seite des ersten Profils angeordnet sein. Das erste Profil kann über das Verbindungsprofil an den Stabilisierungsmitteln befestigt sein. Das Verbindungsprofil kann direkt an den Stabilisierungsmitteln befestigt sein. Das erste Profil kann mit dem ersten Nutenstein in der zweiten Ausrichtung am Verbindungsprofil befestigt sein. Das erste Profil kann in diesem Fall oberhalb der Stabilisierungsmittel angeordnet und als Handlauf ausgebildet sein. Das erste Profil und das Verbindungsprofil können parallel zueinander angeordnet sein.

Nach einer Ausführungsform der Erfindung kann der erste und/oder der zweite Nutenstein jeweils eine Durchführung aufweisen. In der Durchführung kann ein Innengewinde angeordnet sein. Solche Nutensteine eignen sich besonders gut für eine kraftschlüssige Fixierung innerhalb der jeweiligen Nut mit den Befestigungselemente.

Nach einer Ausführungsform der Erfindung können die Befestigungselemente als Schrauben ausgebildet sein und in die Durchführungen einschraubbar sein, um den ersten Nutenstein und/oder den zweiten Nutenstein in der ersten T-Nut und/oder in der zweiten T-Nut kraftschlüssig in der zweiten Ausrichtung zu fixieren. Hierbei ist es insbesondere möglich, dass der erste Nutenstein in der ersten T-Nut fixiert werden. Der zweite Nutenstein kann in der zweiten T-Nut fixiert werden.

Nach einer Ausführungsform der Erfindung können die zweiten Nutensteine dazu ausgebildet sein, beim Einschrauben der Schrauben in die jeweilige Durchführung von der ersten Ausrichtung in die zweite Ausrichtung verdreht zu werden. Vorzugsweise verbleiben sie dabei während des Einschraubens in der zweiten Ausrichtung. Dies kann beispielsweise erreicht werden, indem die Verdrehung der Nutensteine mit relativ wenig Kraft möglich ist und die zweiten Nutensteine jeweils eine Anschlagsfläche aufweisen, mit der sie in der zweiten Ausrichtung an einer Begrenzung der jeweiligen T-Nut anschlagen und so nicht mehr in der gleichen Richtung verdrehbar sind. So wird der Formschluss zwischen den Nutensteinen und der jeweiligen T-Nut automatisch beim Einschrauben der Schrauben erreicht. Ein Benutzer muss nicht zunächst die Nutensteine verdrehen und dann beim Einschrauben darauf achten, dass sie in der zweiten Ausrichtung verbleiben.

Nach einer Ausführungsform der Erfindung können beim Lösen der durch das Einschrauben hergestellten Schraubverbindungen zwischen den Schrauben und den zweiten Nutensteinen die zweiten Nutensteine von der zweiten Ausrichtung in die erste Ausrichtung verdreht werden. Vorzugsweise können die zweiten Nutensteine während des Lösens in der ersten Ausrichtung verbleiben. Dies kann beispielsweise mit einer weiteren Anschlagsfläche der zweiten Nutensteine erreicht werden, die beim Lösen an einer Begrenzung der jeweiligen T-Nut anschlagen. So können die Nutensteine direkt nach dem Lösen der Schraubverbindungen aus der T-Nut entnommen werden.

Nach einer Ausführungsform der Erfindung können die zweiten Nutensteine jeweils zumindest ein Rastelement aufweisen, das beim Lösen der durch das Einschrauben hergestellten Schraubverbindung in Eingriff mit einer Kante der jeweiligen T-Nut gelangt. Die Kante kann beispielsweise eine Kante einer der Hinterschneidungen sein. Vorzugweise kann es sich dabei um zwei Rastelemente handeln, die mit einander gegenüberliegenden Kanten der jeweiligen T-Nut gelangen. Die beiden Kanten können beispielsweise den mittleren Bereich der T-Nut begrenzen. Bei dieser Ausführungsform wird nicht zwangsläufig die weitere Anschlagsfläche benötigt. Ein Benutzer bemerkt beim Lösen der Schraubverbindung den Eingriff des Rastelements bzw. der Rastelemente mit der bzw. den Kante(n) und kann an dieser Stelle mit der Drehbewegung aufhören und dann die Nutensteine bequem aus der jeweiligen T-Nut entnehmen oder das jeweilige Profil von den Nutensteinen entfernen.

Nach einer Ausführungsform der Erfindung kann das erste Profil und/oder das zweite Profil nur genau eine einzige T-Nut aufweisen. Dies ist besonders vorteilhaft für eine besonders einfache Befestigung des jeweiligen Profils.

Beispielsweise kann das erste Profil oder das zweite Profil mit den ersten bzw. den zweiten Nutensteinen am Befestigungsprofil befestigt sein. Das Befestigungsprofil kann parallel zum ersten und/oder zum zweiten Profil angeordnet sein.

Nach einer Ausführungsform der Erfindung kann das Befestigungsprofil in einer horizontalen Richtung versetzt zum Bauteil angeordnet sein. Hierbei kann es sich um ein vorgesetztes Geländer handeln.

Nach einer Ausführungsform der Erfindung kann das Befestigungsprofil in einer vertikalen Richtung versetzt zum Bauteil angeordnet sein. Hierbei kann es sich um ein aufgesetztes Geländer handeln.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische Ansicht eines Geländermoduls nach einer Ausführungsform der Erfindung, befestigt an einem Befestigungsprofil zur vorgesetzten Montage;
- Fig. 2: einen Ausschnitt aus einem oberen Bereich des Geländermoduls aus Fig. 1;
- Fig. 3: einen Ausschnitt aus einem unteren Bereich des Geländermoduls aus Fig. 1;
- Fig. 4: den Ausschnitt aus Fig. 3 mit Nutensteinen in einer anderen Ausrichtung;
- Fig. 5: eine schematische Ansicht eines Geländermoduls nach einer Ausführungsform der Erfindung, befestigt an einem Befestigungsprofil zur aufgesetzten Montage;
- Fig. 6: einen Ausschnitt aus einem unteren Bereich des Geländermoduls aus Fig. 5; und
- Fig. 7: den Ausschnitt aus Fig. 6 mit Nutensteinen in einer anderen Ausrichtung.

Das Geländermodul 100 umfasst ein Profil 101 und einen Handlauf 102. Der Handlauf 102 ist ebenfalls als Profil ausgebildet. Das Profil 101 weist eine T-Nut 103 auf. Der Handlauf 102 weist ebenfalls eine T-Nut 104 auf. Der Handlauf 102 ist an einem Verbindungsprofil 105 befestigbar. Das Profil 101 ist an einem Befestigungsprofil 106 befestigbar, das ebenfalls Bestandteil des Geländermoduls 100 ist. Mit dem Befestigungsprofil 106 kann das Geländermodul 100 vorgesetzt vor einem Bauteil wie beispielsweise einem Balkon, einem französischen Balkon, einer Brüstung oder einer Treppe montiert werden. Zwischen dem Verbindungsprofil 105 und dem Profil 101 sind vertikale Streben 109 als Stabilisierungsmittel angeordnet. Anstelle der Streben 109 könnte auch eine oder mehrere Platten zwischen dem Verbindungsprofil 105 und dem Profil 101 angeordnet sein. Die Längsachse der Streben 109 erstrecken sich in einer vertikalen Richtung. Das Profil 101, der Handlauf 102, das Verbindungsprofil 105 und das Befestigungsprofil 106 sind senkrecht zu den vertikalen Streben 109 angeordnet. Die Längsachsen des Profils 101, des Handlaufs 102, des Verbindungsprofils 105 und des Befestigungsprofils 106 erstrecken sich in einer horizontalen Richtung. Das Befestigungsprofil 106 kann beispielsweise an einem Bauteil, z.B. an einem Balkon, an einem französischen Balkon, einer Brüstung oder einer Treppe befestigt werden.

Die Streben 109 sind an ihrer Oberseite direkt am Verbindungsprofil 105 befestigt. An ihrer Unterseite sind die Streben 109 direkt am Profil 101 befestigt.

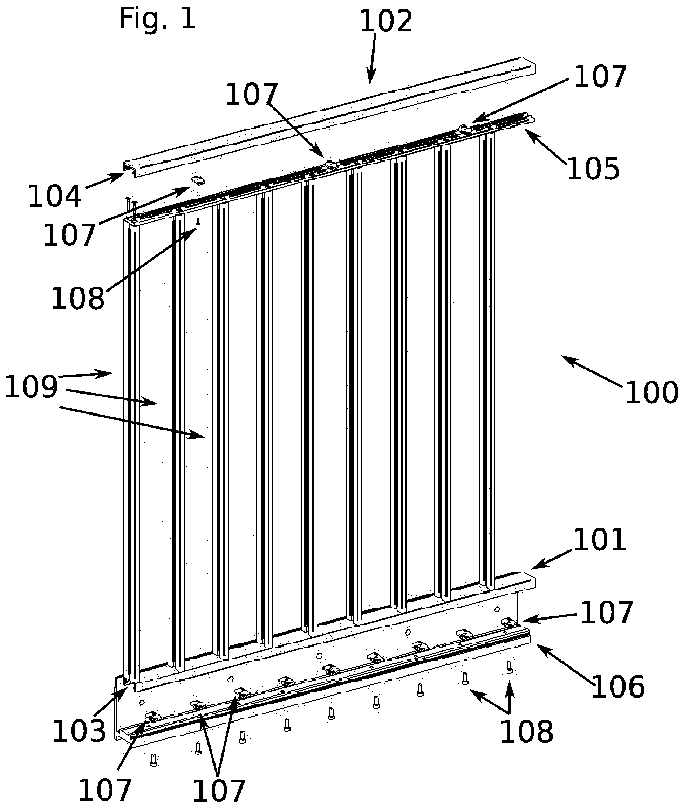

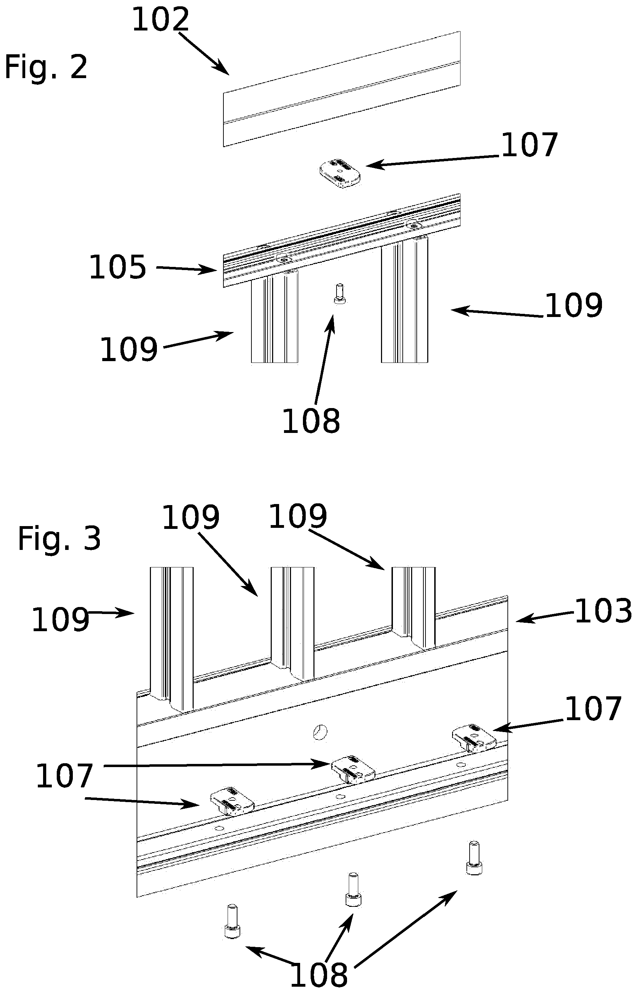

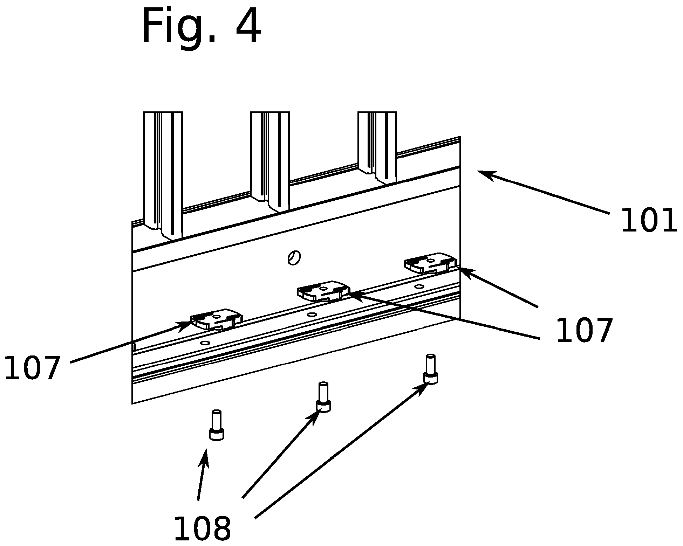

Der Handlauf 102 kann folgendermaßen am Verbindungsprofil 105 befestigt werden. Die T-Nut 104 des Handlaufs 102 weist in Richtung des Verbindungsprofils 105. Nutensteine 107 werden in einer ersten Ausrichtung in die T-Nut 104 des Handlaufs 102 eingesetzt. Sie werden an eine geeignete Stelle verschoben und können dort unter Verwendung von Schrauben 108 fixiert werden. Das Fixieren erfolgt, indem die Schrauben 108 durch Ausnehmungen im Verbindungsprofil 105 hindurch in die Nutensteine 107 geschraubt werden. Während dieses Schraubvorgangs werden die Nutensteine 107 um eine vertikale Achse um 90° in eine zweite Ausrichtung gedreht. In dieser zweiten Ausrichtung können die Nutensteine 107 noch innerhalb der T-Nut 104 des Handlaufs 102 verschoben werden. Sie können jedoch nur noch an den Enden des Handlaufs 102 aus der T-Nut 104 entnommen werden. Eine Entnahme zwischen den Enden ist aufgrund von Hinterschneidungen, die äußere Bereiche der T-Nut 104 abdecken, nicht möglich, da in der zweiten Ausrichtung die Nutensteine 107 in die äußeren Bereich hineinragen und so formschlüssig in der T-Nut 104 gehalten sind. Im fixierten Zustand sind die Nutensteine 107 nicht mehr innerhalb der T-Nut 104 des Handlaufs 102 verschiebbar, sondern kraftschlüssig fixiert. In den Figuren 1 bis 3 sind die Nutensteine 107 in der zweiten Ausrichtung dargestellt. In Figur 4 sind die Nutensteine 107 in der ersten Ausrichtung dargestellt.

Die Befestigung des Profils 101 am Befestigungsprofil 106 erfolgt ähnlich wie die des Handlaufs 102 am Verbindungsprofil 105. Nutensteine 107, von denen aus Gründen der Übersichtlichkeit nicht alle mit einem Bezugszeichen versehen sind, werden in der ersten Ausrichtung in die T-Nut 103 des Profils 101 eingesetzt. Dort sollen sie, um das Profil 101 am Befestigungsprofil 106 zu befestigen, mit Schrauben 108 fixiert werden. Zu diesem Zweck werden die Schrauben 108 durch Ausnehmungen im Befestigungsprofil 106 hindurch in die Nutensteine 107, die in der ersten Ausrichtung innerhalb der T-Nut 103 des Profils 101 angeordnet sind, eingeschraubt. Während dieses Schraubvorgangs werden die Nutensteine 107 um 90° um eine vertikale Achse in eine zweite Ausrichtung verdreht. In der zweiten Ausrichtung sind die Nutensteine 107 formschlüssig in der T-Nut 103 des Profils 101 angeordnet und dort in Längsrichtung verschiebbar. Die Nutensteine 107 können in der zweiten Ausrichtung nur noch an den Enden der T-Nut 103 des Profils 101 aus der T-Nut 103 herausgeschoben werden. Eine Entnahme der Nutensteine 107 zwischen den beiden Enden ist dann nicht mehr möglich. Nach der durchgeführten Fixierung sind sie in der zweiten Ausrichtung in der T-Nut 103 des Profils 101 angeordnet und fixiert, sodass sie nicht mehr verschoben werden können. In Figur 1 sind dabei aus Gründen der Übersichtlichkeit nicht alle Schrauben 108 mit einem Bezugszeichen versehen.

Bei der Demontage des Geländermoduls 100 können die Verbindungen zwischen dem Befestigungsprofil 106 und dem Profil 101 und zwischen dem Handlauf 102 und dem Verbindungsprofil 105 gelöst werden, indem die Schraubverbindungen zwischen den Schrauben 108 und den Nutensteinen 107 gelöst werden. Beim Lösen der Schraubverbindungen werden die Nutensteine 107 wieder in die erste Ausrichtung gedreht, sodass sie aus der jeweiligen T-Nut 103 bzw. 104 entnommen werden können.

Das Geländermodul 100 ist besonders vorteilhaft, da sowohl der Handlauf 102 einfach am Verbindungsprofil 105 zu befestigen und vom Verbindungsprofil 105 zu lösen ist als auch das Profil 101 einfach am Befestigungsprofil 106 zu befestigen und vom Befestigungsprofil 106 zu lösen ist. Je nach dem wo das Befestigungsprofil 106 angeordnet ist, kann das Geländermodul 100 so entweder einem Bauteil wie einem Balkon, einem französischen Balkon, einer Brüstung oder einer Treppe vorgesetzt oder auf einem Bauteil, z.B. einem Balkon, einem französischen Balkon, einer Brüste oder einer Treppe aufgesetzt sein.

Es ist insbesondere vorteilhaft, ein Balkongeländer aus mehreren Geländermodulen 100 herzustellen. Zu diesem Zweck müssen lediglich mehrere der Geländermodule 100 miteinander verbunden werden. Falls die Breite der miteinander verbundenen Geländermodule 100 nicht der Breite des Bauteils entspricht kann ein mit Sondermaßen angefertigtes Geländermodul 100 mit den anderen Geländermodulen verbunden werden, um die Maße aufeinander abzustimmen.

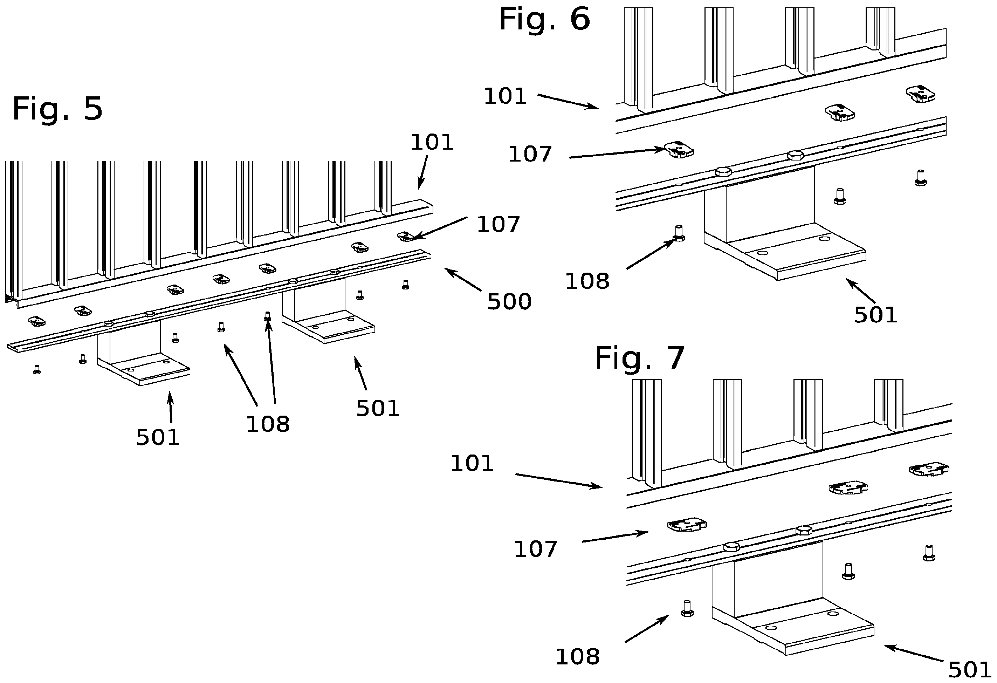

Das in den Figuren 5 bis 7 dargestellte Geländermodul unterscheidet sich vor allem von der Ausführungsform aus den Figuren 1 bis 4 durch das Befestigungsprofil 500. Über Montagemittel 501 kann das Befestigungsprofil 500 aufgesetzt auf einem Bauteil wie einem Balkon, französischem Balkon, einer Brüstung oder einer Treppe montiert werden. Die Befestigung des Profils 101 am Befestigungsprofil 500 erfolgt ähnlich oder genauso wie die Befestigung des Profils 101 am Befestigungsprofil 106.

Die Nutensteine 107 sind in den Figuren 5 und 6 - ähnlich wie in den Figuren 1 bis 3 - in der zweiten Ausrichtung dargestellt, in der sie formschlüssig in der T-Nut des Profils 101 angeordnet sein können. In Figur 7 sind die Nutensteine 107 - ähnlich wie in Figur 4 - in der ersten Ausrichtung dargestellt, in der das Profil 101 von ihnen gelöst werden kann.

Wenn ein Balkongeländer komplett aus verschiedenen Geländermodulen 100 hergestellt wird, kann anstelle vieler Handläufe 102 der einzelnen Geländermodule 100 auch ein einziger Handlauf als einzelnes einteiliges Profil vorgesehen sein, das sich durchgängig über mehrere Geländermodule 100 erstreckt. Dies gilt für beide in den Figuren dargestellte Ausführungsformen.

## Patentansprüche

1. System, umfassend ein Bauteil, ein am Bauteil befestigtes Geländer mit mehreren Geländermodulen (100) und ein Befestigungsprofil (106), wobei jedes Geländermodul (100), zumindest einen ersten Nutenstein (107), ein erstes Profil (101; 102) und am ersten Profil (101; 102) angeordnete Stabilisierungsmittel (109) umfasst, wobei das erste Profil (101; 102) eine erste T-Nut (103; 104) aufweist, wobei der erste Nutenstein (107) profilförmig ausgebildet ist, eine Längsachse aufweist, die länger als das 10-Fache der Länge seiner Querachse oder Hochachse ist und in die erste T-Nut (103;104) einschiebbar ist, wodurch das Geländer mit dem Befestigungsprofil (106) an einem Rand des Bauteils befestigt ist, wobei die Geländermodule (100) aneinander befestigt sind.

2. System nach Anspruch 1, **dadurch gekennzeichnet, dass** das Geländermodul (100) Befestigungselemente (108) umfasst, wobei der erste Nutenstein (107) in einer zweiten Ausrichtung innerhalb der ersten T-Nut (103; 104) verschiebbar ist, wobei der erste Nutenstein (107) unter Verwendung zumindest eines der Befestigungselemente (108) in der ersten T-Nut (103; 104) kraftschlüssig fixierbar ist.

3. System nach einem der vorherigen Ansprüche, **dadurch gekennzeichnet, dass** die erste T-Nut (103) auf einer von den Stabilisierungsmitteln (109) weg gerichteten Seite des ersten Profils (101) angeordnet ist.

4. System nach dem vorherigen Anspruch, **dadurch gekennzeichnet, dass** das Geländermodul (100) ein zweites Profil (102) und zumindest einen zweiten Nutenstein (107) umfasst, wobei das zweite Profil (102) parallel zum ersten Profil (101) angeordnet ist, wobei die Stabilisierungsmittel (109) zwischen dem ersten Profil (101) und dem zweiten Profil (102) angeordnet sind, wobei das zweite Profil (102) eine zweite T-Nut (104) aufweist, wobei der zweite Nutenstein (107) in einer ersten Ausrichtung in die zweite T-Nut (104) einsetzbar ist, wobei der zweite Nutenstein (107) durch eine Verdrehung innerhalb der zweiten T-Nut (104) aus der ersten Ausrichtung in eine zweite Ausrichtung formschlüssig in der zweiten T-Nut (104) anordbar ist oder wobei der zweite Nutenstein (107) profilförmig ausgebildet ist und in die zweite T-Nut (104) einschiebbar ist.

5. System nach dem vorherigen Anspruch, **dadurch gekennzeichnet, dass** das Geländermodul (100) ein Verbindungsprofil (105) umfasst, wobei das Verbindungsprofil (105) zwischen dem zweiten Profil (102) und den Stabilisierungsmitteln (109) angeordnet ist, wobei die zweite T-Nut (104) auf einer zum Verbindungsprofil (105) hin gerichteten Seite des zweiten Profils (102) angeordnet ist, wobei das zweite Profil (102) mit dem zweiten Nutenstein (107) in der zweiten Ausrichtung am Verbindungsprofil (105) befestigt ist, und wobei das Verbindungsprofil (105) an den Stabilisierungsmitteln (109) befestigt ist.

6. System nach einem der Ansprüche 1 oder 2, **dadurch gekennzeichnet, dass** das Geländermodul (100) ein Verbindungsprofil (105) umfasst, wobei das Verbindungsprofil (105) zwischen dem ersten Profil (102) und den Stabilisierungsmitteln (109) angeordnet ist, wobei die erste T-Nut (104) auf einer zum Verbindungsprofil (105) hin gerichteten Seite des ersten Profils (102) angeordnet ist, wobei das erste Profil (102) über das Verbindungsprofil (105) an den Stabilisierungsmitteln (109) befestigt ist, und wobei das erstes Profil (102) mit dem ersten Nutenstein (107) in der zweiten Ausrichtung am Verbindungsprofil (105) befestigt ist.

7. System nach einem der vorherigen Ansprüche, **dadurch gekennzeichnet, dass** der erste und/oder der zweite Nutenstein (107) jeweils eine Durchführung aufweisen, wobei in der Durchführung ein Innengewinde angeordnet ist.

8. System nach dem vorherigen Anspruch, **dadurch gekennzeichnet, dass** die Befestigungselemente (108) als Schrauben (108) ausgebildet sind, wobei die Schrauben (108) in die Durchführungen einschraubbar sind, um den ersten Nutenstein (107) und/oder den zweiten Nutenstein (107) in der ersten T-Nut (103) und/oder in der zweiten T-Nut (104) kraftschlüssig in der zweiten Ausrichtung zu fixieren.

9. System nach dem vorherigen Anspruch, **dadurch gekennzeichnet, dass** der zweite Nutenstein (107) dazu ausgebildet ist, beim Einschrauben der Schrauben (108) in die jeweilige Durchführung von der ersten Ausrichtung in die zweite Ausrichtung verdreht zu werden.

10. System nach einem der beiden vorherigen Ansprüche, **dadurch gekennzeichnet, dass** das Geländermodul (100) mehrere erste Nutensteine (107) und/oder mehrere zweite Nutensteine (107) umfasst, die jeweils Durchführungen mit einem Innengewinde aufweisen, in die die Befestigungselemente einschraubbar sind, wobei beim Lösen der durch das Einschrauben hergestellten Schraubverbindungen zwischen den Schrauben (108) und den zweiten Nutensteinen (107) die zweiten Nutensteine (107) von der zweiten Ausrichtung in die erste Ausrichtung verdreht werden.

11. System nach einem der Ansprüche 8 oder 9, **dadurch gekennzeichnet, dass** das Geländermodul (100) mehrere erste Nutensteine (107) und/oder mehrere zweite Nutensteine (107) umfasst, die jeweils Durchführungen mit einem Innengewinde aufweisen, in die die Befestigungselemente einschraubbar sind, wobei die zweiten Nutensteine (107) jeweils zumindest ein Rastelement aufweisen, das beim Lösen der durch das Einschrauben hergestellten Schraubverbindung in Eingriff mit einer Kante der jeweiligen T-Nut (103; 104) gelangt.

12. System nach einem der vorherigen Ansprüche, **dadurch gekennzeichnet, dass** das erste Profil (101) und/oder das zweite Profil (102) nur genau eine einzige T-Nut (103; 104) aufweisen.

13. System nach einem der vorherigen Ansprüche, **dadurch gekennzeichnet, dass** das Befestigungsprofil (106) in einer horizontalen Richtung versetzt zum Bauteil angeordnet ist.

14. System nach einem der Ansprüche 1 bis 12, **dadurch gekennzeichnet, dass** das Befestigungsprofil (106) in einer vertikalen Richtung versetzt zum Bauteil angeordnet ist.

## Claims

1. System, comprising a component, a railing which is fastened to the component and has a plurality of railing modules (100), and a fastening profile (106), wherein each railing module (100) comprises at least one first sliding block (107), a first profile (101; 102) and stabilizing means (109) which are arranged on the first profile (101; 102), wherein the first profile (101; 102) has a first T-groove (103; 104), wherein the first sliding block (107) is of profile-shaped design, has a longitudinal axis which is longer than 10 times the length of its transverse axis or vertical axis and can be pushed into the first T-groove (103; 104), as a result of which the railing with the fastening profile (106) is fastened to an edge of the component, wherein the railing modules (100) are fastened to one another.

2. System according to Claim 1, **characterized in that** the railing module (100) comprises fastening elements (108), wherein the first sliding block (107) can be displaced in a second orientation within the first T-groove (103; 104), wherein the first sliding block (107) can be fixed in a force-fitting manner in the first T-groove (103; 104) using at least one of the fastening elements (108).

3. System according to one of the preceding claims, **characterized in that** the first T-groove (103) is arranged on a side of the first profile (101) which is directed away from the stabilizing means (109).

4. System according to the preceding claim, **characterized in that** the railing module (100) comprises a second profile (102) and at least one second sliding block (107), wherein the second profile (102) is arranged parallel to the first profile (101), wherein the stabilizing means (109) are arranged between the first profile (101) and the second profile (102), wherein the second profile (102) has a second T-groove (104), wherein the second sliding block (107) can be inserted into the second T-groove (104) in a first orientation, wherein the second sliding block (107) can be arranged in a form-fitting manner in the second T-groove (104) by means of a rotation within the second T-groove (104) from the first orientation into a second orientation, or wherein the second sliding block (107) is of profile-shaped design and can be pushed into the second T-groove (104).

5. System according to the preceding claim, **characterized in that** the railing module (100) comprises a connecting profile (105), wherein the connecting profile (105) is arranged between the second profile (102) and the stabilizing means (109), wherein the second T-groove (104) is arranged on a side of the second profile (102) which is directed towards the connecting profile (105), wherein the second profile (102) with the second sliding block (107) is fastened to the connecting profile (105) in the second orientation, and wherein the connecting profile (105) is fastened to the stabilizing means (109).

6. System according to either of Claims 1 and 2, **characterized in that** the railing module (100) comprises a connecting profile (105), wherein the connecting profile (105) is arranged between the first profile (102) and the stabilizing means (109), wherein the first T-groove (104) is arranged on a side of the first profile (102) which is directed towards the connecting profile (105), wherein the first profile (102) is fastened to the stabilizing means (109) via the connecting profile (105), and wherein the first profile (102) with the first sliding block (107) is fastened to the connecting profile (105) in the second orientation.

7. System according to one of the preceding claims, **characterized in that** the first and/or the second sliding block (107) each have a leadthrough, wherein an internal thread is arranged in the leadthrough.

8. System according to the preceding claim, **characterized in that** the fastening elements (108) are designed as screws (108), wherein the screws (108) can be screwed into the leadthroughs in order to fix the first sliding block (107) and/or the second sliding block (107) in the first T-groove (103) and/or in the second T-groove (104) in a force-fitting manner in the second orientation.

9. System according to the preceding claim, **characterized in that** the second sliding block (107) is designed to be rotated from the first orientation into the second orientation when the screws (108) are screwed into the respective leadthrough.

10. System according to one of the two preceding claims, **characterized in that** the railing module (100) comprises a plurality of first sliding blocks (107) and/or a plurality of second sliding blocks (107) which each have leadthroughs with an internal thread into which the fastening elements can be screwed, wherein the second sliding blocks (107) are rotated from the second orientation into the first orientation when the screw connections between the screws (108) and the second sliding blocks (107) which are produced by the screwing in are released.

11. System according to either of Claims 8 and 9, **characterized in that** the railing module (100) comprises a plurality of first sliding blocks (107) and/or a plurality of second sliding blocks (107) which each have leadthroughs with an internal thread into which the fastening elements can be screwed, wherein the second sliding blocks (107) each have at least one latching element which engages with an edge of the respective T-groove (103; 104) when the screw connection which is produced by the screwing in is released.

12. System according to one of the preceding claims, **characterized in that** the first profile (101) and/or the second profile (102) have only exactly one single T-groove (103; 104).

13. System according to one of the preceding claims, **characterized in that** the fastening profile (106) is arranged offset with respect to the component in a horizontal direction.

14. System according to one of Claims 1 to 12, **characterized in that** the fastening profile (106) is arranged offset with respect to the component in a vertical direction.

## Revendications

1. Système, comprenant un composant, un garde-corps fixé au composant avec plusieurs modules de garde-corps (100) et un profilé de fixation (106), dans lequel chaque module de garde-corps (100) comprend au moins un premier coulisseau (107), un premier profilé (101; 102) et des moyens de stabilisation (109) disposés sur le premier profilé (101 ; 102), dans lequel le premier profilé (101; 102) présente une première rainure en T (103; 104), dans lequel le premier coulisseau (107) est réalisé en forme de profilé, présente un axe longitudinal qui est plus long que 10 fois la longueur de son axe transversal ou axe vertical et peut être inséré dans la première rainure en T (103; 104), moyennant quoi le garde-corps avec le profilé de fixation (106) est fixé à un bord du composant, dans lequel les modules de garde-corps (100) sont fixés les uns aux autres.

2. Système selon la revendication 1, **caractérisé en ce que** le module de garde-corps (100) comprend des éléments de fixation (108), dans lequel le premier coulisseau (107) peut être déplacé dans une deuxième orientation à l'intérieur de la première rainure en T (103; 104), dans lequel le premier coulisseau (107) peut être fixé par engagement par force dans la première rainure en T (103; 104) en utilisant au moins l'un des éléments de fixation (108).

3. Système selon l'une quelconque des revendications précédentes, **caractérisé en ce que** la première rainure en T (103) est disposée sur un côté du premier profilé (101) orienté à l'opposé des moyens de stabilisation (109).

4. Système selon la revendication précédente, **caractérisé en ce que** le module de garde-corps (100) comprend un deuxième profilé (102) et au moins un deuxième coulisseau (107), dans lequel le deuxième profilé (102) est disposé parallèlement au premier profilé (101), dans lequel les moyens de stabilisation (109) sont disposés entre le premier profilé (101) et le deuxième profilé (102), dans lequel le deuxième profilé (102) présente une deuxième rainure en T (104), dans lequel le deuxième coulisseau (107) peut être inséré dans la deuxième rainure en T (104) dans une première orientation, dans lequel le deuxième coulisseau (107) peut être disposé par engagement par correspondance géométrique dans la deuxième rainure en T (104) par une rotation à l'intérieur de la deuxième rainure en T (104) de la première orientation à une deuxième orientation ou dans lequel le deuxième coulisseau (107) est réalisé en forme de profilé et peut être inséré dans la deuxième rainure en T (104).

5. Système selon la revendication précédente, **caractérisé en ce que** le module de garde-corps (100) comprend un profilé de liaison (105), dans lequel le profilé de liaison (105) est disposé entre le deuxième profilé (102) et les moyens de stabilisation (109), dans lequel la deuxième rainure en T (104) est disposée sur un côté du deuxième profilé (102) orienté vers le profilé de liaison (105), dans lequel le deuxième profilé (102) avec le deuxième coulisseau (107) est fixé au profilé de liaison (105) dans la deuxième orientation, et dans lequel le profilé de liaison (105) est fixé aux moyens de stabilisation (109).

6. Système selon l'une quelconque des revendications 1 ou 2, **caractérisé en ce que** le module de garde-corps (100) comprend un profilé de liaison (105), dans lequel le profilé de liaison (105) est disposé entre le premier profilé (102) et les moyens de stabilisation (109), dans lequel la première rainure en T (104) est disposée sur un côté du premier profilé (102) orienté vers le profilé de liaison (105), dans lequel le premier profilé (102) est fixé aux moyens de stabilisation (109) par le biais du profilé de liaison (105), et dans lequel le premier profilé (102) avec le premier coulisseau (107) est fixé au profilé de liaison (105) dans la deuxième orientation.

7. Système selon l'une quelconque des revendications précédentes, **caractérisé en ce que** le premier et/ou le deuxième coulisseau (107) présentent à chaque fois un passage, dans lequel un filetage intérieur est disposé dans le passage.

8. Système selon la revendication précédente, **caractérisé en ce que** les éléments de fixation (108) sont réalisés sous forme de vis (108), dans lequel les vis (108) peuvent être vissées dans les passages, afin de fixer par engagement par force le premier coulisseau (107) et/ou le deuxième coulisseau (107) dans la première rainure en T (103) et/ou dans la deuxième rainure en T (104) dans la deuxième orientation.

9. Système selon la revendication précédente, **caractérisé en ce que** le deuxième coulisseau (107) est réalisé de manière à être tourné lors du vissage des vis (108) dans le passage respectif de la première orientation à la deuxième orientation.

10. Système selon l'une quelconque des deux revendications précédentes, **caractérisé en ce que** le module de garde-corps (100) comprend plusieurs premiers coulisseaux (107) et/ou plusieurs deuxièmes coulisseaux (107) qui présentent à chaque fois des passages avec un filetage intérieur, dans lesquels les éléments de fixation peuvent être vissés, dans lequel lors du desserrage des liaisons vissées réalisées par le vissage entre les vis (108) et les deuxièmes coulisseaux (107), les deuxièmes coulisseaux (107) sont tournés de la deuxième orientation à la première orientation.

11. Système selon l'une quelconque des revendications 8 ou 9, **caractérisé en ce que** le module de garde-corps (100) comprend plusieurs premiers coulisseaux (107) et/ou plusieurs deuxièmes coulisseaux (107) qui présentent à chaque fois des passages avec un filetage intérieur, dans lesquels les éléments de fixation peuvent être vissés, dans lequel les deuxièmes coulisseaux (107) présentent à chaque fois au moins un élément d'encliquetage qui, lors du desserrage de la liaison vissée réalisée par le vissage, vient en prise avec un bord de la rainure en T (103 ; 104) respective.

12. Système selon l'une quelconque des revendications précédentes, **caractérisé en ce que** le premier profilé (101) et/ou le deuxième profilé (102) ne présentent qu'exactement une seule rainure en T (103 ; 104).

13. Système selon l'une quelconque des revendications précédentes, **caractérisé en ce que** le profilé de fixation (106) est disposé de manière décalée dans une direction horizontale par rapport au composant.

14. Système selon l'une quelconque des revendications 1 à 12, **caractérisé en ce que** le profilé de fixation (106) est disposé de manière décalée dans une direction verticale par rapport au composant.
